# EUROPEAN PATENT APPLICATION

(11) **EP 2 442 264 A1**
(43) Date of publication of application: **18.04.2012**
(21) Application number: 11007722.9
(22) Date of filing: 22.09.2011
(51) Int. Cl.: G06Q 10/00

(54) **Business network management**

(30) Priority: 12.10.2010 US 902988
(71) Applicant: SAP AG, 69190 Walldorf (DE)
(72) Inventor: Liebig, Christoph Hermann, 69190 Walldorf (DE); Bhatt, Ankur, 69190 Walldorf (DE); Rothemel, Gunther, 69190 Walldorf (DE); Ackermann, Joerg, 69190 Walldorf (DE); Ritter, Daniel, 69190 Walldorf (DE); Beunings, Frank, 69190 Walldorf (DE); Hoffmann, Frank O., 69190 Walldorf (DE)
(74) Representative: Müller-Boré & Partner Patentanwälte

(57) **Abstract**

A computer-implemented method includes: receiving metadata about a business network, the metadata gathered by computer-based entities performing automated discovery of the business network; generating a business network model based on the metadata, the business network model comprising objects and associations between them, the objects representing aspects of the business network found by the automated discovery, including at least: participants, systems, relationships, applications, interfaces, middleware, process steps, and documents; and modifying the business network model based on at least one input.

## Description

### TECHNICAL FIELD

This description relates to business network management.

### BACKGROUND

Business networks occur in many aspects of commerce. Each business network includes a set of participants, such as people, organizations, companies, who collaborate in various ways to conduct business. For example, the business involves manufacturing, storing, distributing or servicing goods, or delivering a product or service to a customer. Many of such participants have implemented enterprise resource planning (ERP) systems and other application systems for these purposes, to support their internal processes. For example, cross-organizational activities related to service delivered by the business network can interface with (or run within) application systems of one or more participants. Some business network participants may use additional information systems and information technology (IT) based process orchestrations to deliver the service.

Business processes running end-to-end in a business network are executed on local application systems of various participants. Today, participants who wish to enable end-to-end business network operations and provide visibility into business transactions and overall business network performance, may need to implement costly, risky and time consuming projects to deliver process integration into the respective local applications, and for each partner integrate with the partner's applications. In the context of business networks, this business-IT dilemma may be exaggerated by a disconnect within or between participating organizations between, on the one hand, their individual IT situation, and on the other, their business language. The cost and complexity is further multiplied by the number of participants who must collaborate in a business network to achieve a common goal. This number ranges from fifty (at the low end) to many hundred in some enterprise settings. For each participant, the integration, operation and visibility needs to be addressed case-by-case, covering the end-to-end flow of business information and values, from activities within the private domain of one participant (e.g., the solicitation of a quote) to the partner's corresponding business activities (e.g., the confirmation of an order) and follow-up activities by related participants (e.g., production orders, shipping advice, etc.). Each partner-to-partner collaboration in the network needs to be implemented against autonomously designed information systems and integration technologies.

Generally, bringing information system support to a business network requires that mutual knowledge be acquired about the global view of the business network, or in a sense, of the network fabric. Most often, the required knowledge for such an integration is distributed over multiple or even many people in the organization. Typically, no single person has an end-to-end understanding of the business processes, organizations and IT landscape of their own organization, let alone those of all the involved participants. This lack of knowledge and the disconnect between participants (and their business and IT organizations) hinders the effective delivery of information system support for the collaborative business activities and business network lifecycle events. For example, effective support requires managing the evolution of the information system and business process operations, such as: on- or off-boarding participants, modifying process steps or information exchange, creating process variants due to regional or contractual variations, changing contracts regarding business rules and service level agreements (SLAs), ensuring continuous operations, and performing business optimization.

### SUMMARY

This document describes examples of a service that captures and externalizes global knowledge of a business network in an accurate and consumable depiction. As described below, the knowledge can be acquired by an automated data mining facility. Each business network participant can apply one or more agents or proxies in its landscape and feed the locally acquired fabric metadata into the provided business network management service. Such a service may be independent of the participants and not bound to any of them, but rather provided by a third party, for example as a cloud service. The business network management service can compose and consolidate the locally acquired metadata into a fabric of semantic information that identifies, describes and relates to each other, concepts and things and their business relationships that exist in the business network. Particularly, the business network model can be visualized by assigning objects to represent discovered features including, but not limited to, participants, systems, relationships, applications, interfaces, middleware, process steps, and documents.

In a first aspect, a computer-implemented method includes: receiving metadata about a business network, the metadata gathered by computer-based entities performing automated discovery of the business network; generating a business network model based on the metadata, the business network model comprising objects and associations between them, the objects representing aspects of the business network found by the automated discovery, including at least: participants, systems, relationships, applications, interfaces, middleware, process steps, and documents; and modifying the business network model based on at least one input.

Implementations can include any or all of the following features. The input includes a network enhancement instruction, and the business network model is modified by adding at least a first object. The first object represents an organization being added to the business network as a participant. The method further includes receiving other metadata reflecting another business network to which the organization belongs, and using the other metadata in modifying the business network model. The network enhancement instruction includes a simulation instruction, and the method further includes using the modified business network model to perform a simulated operation of the business network. The input includes a network update instruction based on additional metadata about the business network, and the business network model is modified using the additional metadata. The method further includes defining information layers in the business network model and assigning each of the objects to at least one of the information layers, further comprising: generating a first representation of the business network model at a first level of detail, the first representation including objects assigned to a first information layer. The method further includes receiving a user selection of one of the objects at the first level of detail; and generating a second representation of the business network model at a second level of detail less detailed than the first level, the second representation including those of the objects assigned to a second information layer; wherein, based on the user selection, the second representation also includes the selected object from the first level of detail.

Generating the business network model comprises: generating a first object representing a non-individualized aspect of the business network; generating second objects representing instances of the non-individualized aspect; and associating the second objects with the first object in the business network model. The method further includes using the business network model or the modified business network model for business network lifecycle activities including aiding at least one user in: understanding a first state of the business network, and planning a second state of the business network. The business network lifecycle activities further include aiding the user in: designing and specifying the second state of the business network, and implementing the second state. The business network lifecycle activities further include aiding the user in: causing the business network to assume the second state, and operating and monitoring the business network in the second state. The business network lifecycle activities further include aiding the user in: optimizing the business network, and simulating the business network. The method further includes automatically monitoring or enforcing at least one contract that governs the business network, the contract being monitored or enforced using the business network model.

In a second aspect, a computer program product tangibly embodied in a computer readable storage device includes instructions that when executed cause a processor to perform a method comprising: receiving metadata about a business network, the metadata gathered by computer-based entities performing automated discovery of the business network; generating a business network model based on the metadata, the business network model comprising objects and associations between them, the objects representing aspects of the business network found by the automated discovery, including at least: participants, systems, relationships, applications, interfaces, middleware, process steps, and documents; and modifying the business network model based on at least one input.

In a third aspect, a system includes: a processor; and a computer readable storage device having stored therein: first instructions that when executed cause the processor to generate a business network model based on metadata gathered by computer-based entities performing automated discovery of a business network, the business network model comprising objects and associations between them, the objects representing aspects of the business network found by the automated discovery, including at least: participants, systems, relationships, applications, interfaces, middleware, process steps, and documents metadata; and second instructions that when executed cause the processor to modify the business network model based on at least one input.

Implementations can include any or all of the following features. The input includes a network enhancement instruction, and the business network model is modified by adding at least a first object. The network enhancement instruction includes a simulation instruction, further comprising using the modified business network model to perform a simulated operation of the business network. The system further comprises defining information layers in the business network model and assigning each of the objects to at least one of the information layers, further comprising: generating a first representation of the business network model at a first level of detail, the first representation including objects assigned to a first information layer. Generating the business network model comprises: generating a first object representing a non-individualized aspect of the business network; generating second objects representing instances of non-individualized aspect; and associating the second objects with the first object in the business network model.

Implementations can provide any or all of the following advantages: Significant business network lifecycle events that require the evolution of the information system and the business process operations to be managed are identified. Such lifecycle events can include: Participant on- or off-boarding; change of process steps or information exchange; creation of process variants due to regional or contractual variants; contract changes regarding business rules or service level agreements (SLAs); continuous operations; and business optimization. Effectively and efficiently implementing an evolution of information system-supported business networks. Reducing time and effort for planning, blueprinting and implementation phases. Enabling parties to efficiently operate enhanced collaborative business processes. Providing collaboration in a business network context. Improved monitoring and enforcement of SLAs between partners.

The details of one or more implementations are set forth in the accompanying drawings and the description below. Other features and advantages will be apparent from the description and drawings, and from the claims.

### DESCRIPTION OF DRAWINGS

FIG. 1 shows a block diagram of a business network.
FIG. 2 shows a view of a business network.
FIG. 3 shows a view of another business network.
FIG. 4 shows a view of the business network from FIG. 2 with an added object.
FIGS. 5-9 show other views of the business network from FIG. 4.
FIG. 10 shows an overall business network representation.
FIG. 11 is a block diagram of a computing system that can be used in connection with computer-implemented methods described in this document.

Like reference symbols in the various drawings indicate like elements.

### DETAILED DESCRIPTION

The network for a large enterprise often consists of a network of applications and integration components for in-house internal processes, plus a network of applications and integration components for external processes interacting with business partners, such as suppliers, transport carriers, dealers, etc. In such a landscape, the systems can be classified into different categories to illustrate the heterogeneous nature of the network based on the integration content and the role a system plays in integration within the landscape. That is, the business network has various participants interacting with each other, and these include, for example, application participants implemented as application systems, and mediation participants that facilitate interaction between the application participants.

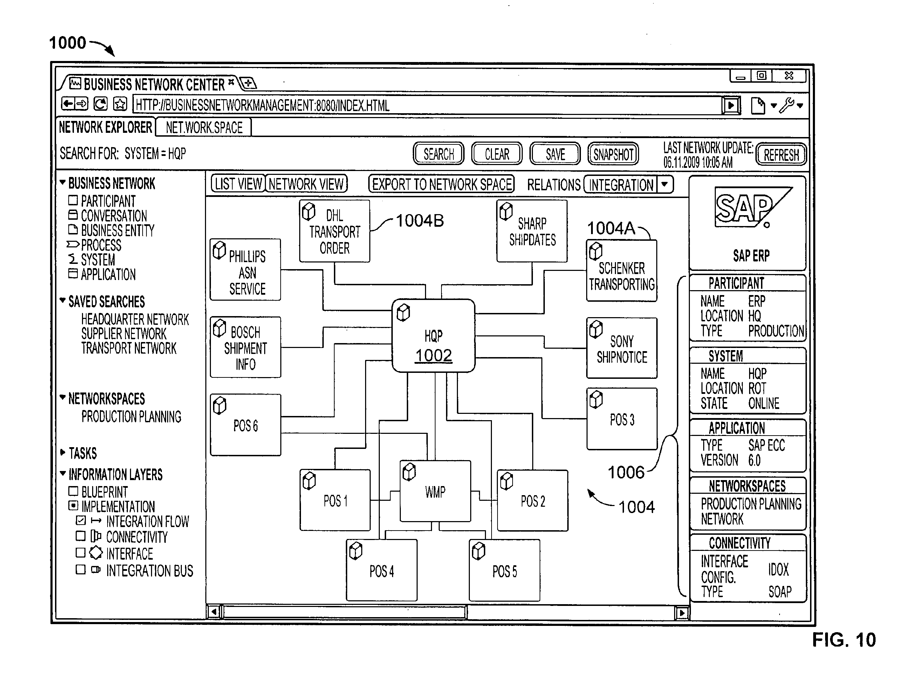

FIG. 10 shows an overall business network representation 1000. In some implementations, the representation 1000 is presented to one or more users to illustrate the business network and to give the user(s) a high-level view of the structure and participants therein. Here, a headquarters production (HQP) participant 1002 is currently shown at the center of the business network. Other participants 1004 are shown with connections to each other and/or to the HQP application 1002. Among the participants in this example is a "Schenker Transporting" participant 1004A and a "DHL Transport Order" participant 1004B, both connected to the HQP participant 1002.

Among other features, the representation 1000 shows both participants who have visibility into the business network and participants that have only limited or no visibility. Here, for example, the HQP participant 1002 is running the agent or proxy, to be described later, which is used for exploring the network from the HQP participant's perspective. The participants 1004A-B, on the other hand, are not using the proxy or agent in this example. These participants therefore have no visibility into the business network.

Nevertheless, the participants 1004A-B can be managed as business network participants from one or more of the other participants' perspective. For example, as illustrated here, the representation 1000 is aware of these participants. Those participants are linked via related business transactions. The interface(s) and connectivity information used by these participants are known to the extent that other enterprises information systems-such as the HQP participant 1002-have knowledge about them. For example, while metadata 1006 has been collected about all participants and stored in the system, the specific metadata portions about the participants 1004A-B includes names of the organizations, interfaces and connectivity information, but does not reflect any application used by such participant(s), or the mediation-participants (e.g., integration middleware) that they are running.

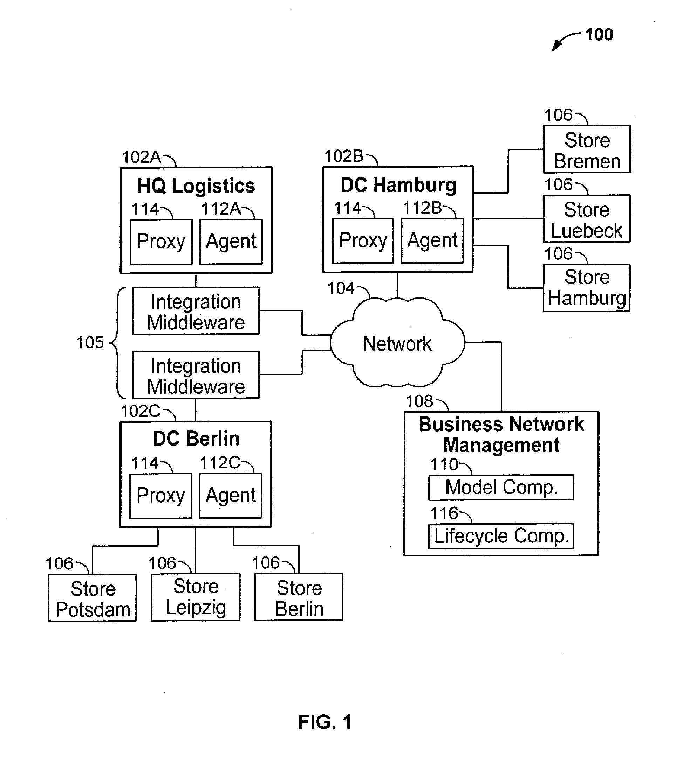

FIG. 1 shows a block diagram of a business network 100. Here, for simplicity, the business network 100 is shown as having three main application participants 102 connected to each other, and that can be connected to other application systems, by any kind of wired or wireless computer network 104, such as the internet. Participants 102A and 102C are here interconnected via a mediation participant 105. For example, the mediation participant 105 represents integration middleware that is used to integrate the applications and respective processes of the participants 102A and 102C. Application participant102A is called "HQ Logistics" and can correspond to a logistics application system running at the company headquarters of a major goods manufacturer or service provider. For example, the application of participant102A serves the business process of planning and executing manufacturing operations, managing stock inventory and controlling the distribution of products within the sales organization.

The application participant 102C, in turn, can correspond to an application system operating at a distribution center (DC) used by the manufacturing company. For example, the application participant 102C is configured to receive information from the application participant 102A via the mediation participant 105 about what goods are being transported to the distribution center, and particulars of those goods and/or their future deliveries. Then the application participant 102C can manage the logistics of maintaining the goods at the distribution center (for example in a warehouse), and finally execute a delivery instruction for transporting the goods to one ore more stores associated with the distribution center. Here, the participating stores are represented as respective store participants 106.

The application participant 102B is here another distribution center application that serves stores in a particular geographic region and is therefore referred to as "DC Hamburg," having the store participants 106 for "Bremen," "Luebeck" and "Hamburg," respectively. More or fewer store participants 106 can be interconnected. Similarly, the application participant 102C is here referred to as "DC Berlin," serving store participants "Potsdam," "Leipzig" and "Berlin," in this example.

Here, a business network management system 108 is connected to the business network 100. In some implementations, the business network management system 108 is provided by a third party and is therefore independent of the participants 102 and other participants in the business network. In other implementations, one or more participants in the business network can implement and/or run the business network management system 108. The business network management system 108 here includes a model component 110 that is used to generate, maintain and modify a business network model corresponding to the business network 100. In a sense, the generated business network model can be viewed as an evolving fabric, dynamically reflecting the respective positions and characteristics of all participants in the business network, and the communications and other interactions between them.

For this purpose, one or more entities such as agents 112 or proxies 114 can be activated for discovering aspects of the business network. Here, each of the application participants 102 activates and launches at least one corresponding agent 112A, B and C. For example, in implementations having a mediation participant, a corresponding agent or proxy can be activated to discover further details and aspects of the business network. The agent collects metadata about and supplies information about the business network to the business network management system 108.

One or more proxies 114 can be activated in the business network. The proxy collects information on behalf of the discovered system. As such, the proxies can participate in the discovery of the business network. In some implementations, the proxy or proxies can be used instead of one or more of the agents 112; in some implementations, either the agents 112 or the proxies 114 are used.

Examples of metadata that entities such as the agent(s) 112 and/or the proxy or proxies 114 can collect include, but are not limited to:
Organization master data from one or more applications. For example, data about: contacts, sales organization, purchase planning organization, distribution center(s), and ship-to-locations.
Product or service master data. For example, data about product or service types, manufacturing, warehousing, and delivery modes.
Process interfaces for the application(s). For example, information describing inbound and outbound interfaces, data syntax and connectivity settings.
Relationships. For example, information about flows that integrate an application into one or more other applications.
Contractual metadata. For example, key performances indicators (KPIs) and SLAs.
System information. For example, data about applications and one or more implemented integration buses.
Physical network information. For example, data about transaction volumes, IP networks, and firewalls.
Runtime information. For example, data about transaction volumes, exceptions, and business documents.

The gathered metadata is used to generate the business network model into a representation of the business network as it exists in the real world. In some implementations, the information is gathered at the "instance" level of the business network. In a simple example, a portion of the model can reflect: that a particular manufacturer X works with a third-party shipper Y, that ship-to-locations for this interaction include Z, and that the manufacturer has a planning organization W Any business network features that are of interest can be tracked and represented in the model. Examples of such features include, but are not limited to: participants, systems, relationships, applications, interfaces, middleware, process steps, and documents.

The business network model can be stored in any suitable computer data format. In some implementations, multidimensional tables are used to hold data and associate data with each other. For example, one or more hypergraphs can be used.

The business network model can be used in generating a presentation of the business network to one or more key personas involved during the evolution of the business network. Examples of such personas include, but are not limited to, actual participants, other stakeholders, business strategists, business users (e.g., directors or power users), process architects (e.g., IT personnel), and business-to-business (B2B) architects. There, user collaboration between participants and within a participant's organization can be presented in the semantic context of the business network.

Such a presentation can allow all involved participants and personas to observe and understand their networks, contractual obligations, orchestrations and interfaces with local processes. Moreover, systems, applications, process integration logic, middleware and business document data of the presented business network model can be explored from a business point of view as well as in terms of IT systems and orchestrations. For example, the terminology of the presentation is tailored to the scope of the exploration (e.g., business terminology or IT terminology). Also, a user can enhance the generated business network model with additional information (i.e., information not captured, or not properly captured, by the agents or proxies), and adopt it to the customer's language. For example, enriching the model with analytical information can facilitate performance monitoring, such as for contracts between participants in the business network.

That is, implementations can facilitate viewing of the business network, in whole or in part, within a relevant context, such as in view of a contract or other documentation. An example use case involves an SLA between two or more network participants. In some implementations, the SLA can be monitored by tracking relevant events in the business network. For example, an outbound delivery document can be captured and its contents are analyzed in view of the parties' rights and obligations regarding such documents. Because the captured document and the SLA exist in the system, automatic compliance monitoring, exception notification and enforcement can be performed.

The generated business network model allows each participant to explore its as-is situation, and also to understand collaborative processes and information system implementations from another participant's point of view. In some implementations, business process architects can analyze the processes and communications that are currently part of the business network. For example, the architect can inspect a particular collaborative process of another participant, and use this as a starting point for designing or revising another collaboration.

In some implementations, B2B architects can seamlessly drill in to an IT view of the generated business network model. This can allow the architect to explore and understand interfaces to a local application landscape, take advantage of component reuse, as well as change and consolidate business process integration flows.

In short, the generated business network model serves as an anchor point for operations, both toward business users and IT support. The business network context provides visibility and relevant background for analyzing business exceptions.

Each of the participants in the business network 100 can operate or control one or more computer-based devices, such as a server. In some implementations, one or more of the participants can be, or be part of, an ERP system that controls various aspects of a company's business operations. The agents 112 or proxies 114 can be implemented with any suitable technology that allows them to collect the necessary metadata, for example as a script or other executable code. The gathered metadata can be consolidated and stored in one ore more repositories using any suitable information format, such as in form of XML data or data tagged with other markup elements.

The business network management system 108 can be used during the lifecycle of the business network 100. In some implementations, a lifecycle component 116 is implemented that monitors and/or supervises any or all such events. Examples of lifecycle events include, but are not limited to, on- or off-boarding of participants; changes being implemented in process steps or in information exchange; process variants being created due to regional or contractual variants; SLAs or other contracts being entered into or modified; continuous operation of the business network; and optimization of the business network. Operations relating to lifecycle events that can be performed include, but are not limited to, the following: aiding user understanding of the business network as it currently exists; planning a change in the business network; aiding the user in designing and specifying the change for the business network; implementing the change for the business network, operating and monitoring the business network after the change; optimizing the business network; and simulating the business network.

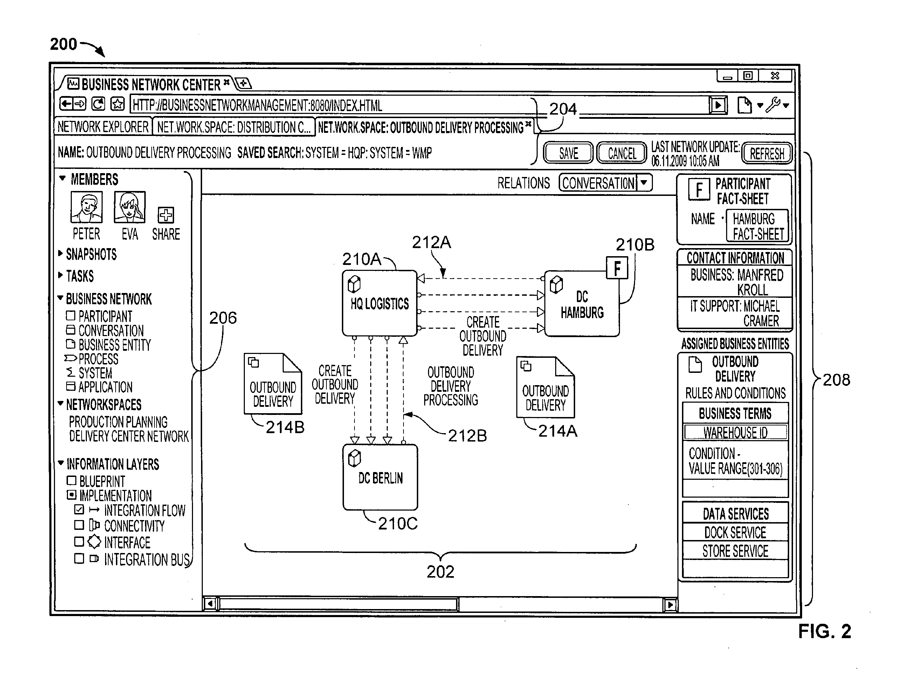

FIG. 2 shows a view 200 of a business network. For example, the business network 100 (FIG. 1) may have been canvassed by one or more of the agents or proxies, and the business network management system 108 (FIG. 1) then presents the view 200 based on a model of the business generated from the gathered metadata. Here, the view 200 includes a business network area 202 that shows some or all of the business network, a tools area 204 for performing functions regarding the shown or other networks, an information/navigation area 206 with the currently collaborating personas and links to other views, and a business network information area 208 for showing details about the business network and for slicing and dicing the information further.

Here, the business network area 202 includes objects 210A-C that represent participants in the business network. With brief reference again to FIG. 1, in some implementations the object 210A represents the HQ Logistics application participant 102A; the object 210B the DC Hamburg application participant 102B; and the object 210C the DC Berlin application participant 102C, respectively. For example, the objects 210A-C are created upon analyzing agent- or proxy-gathered metadata indicating that HQ Logistics, DC Hamburg and DC Berlin are application participants in the business network.

The business network area 202 also includes objects 212A-B that represent one or more relationships between the participants in the business network. In some implementations, a relationship can involve computer-based code and/or other information being exchanged between the participants. For example, the object 212A can represent a so-called "outbound delivery" process, where HQ Logistics informs DC Hamburg of a goods shipment that is in process or about to be made. Such a process can involve multiple communications back and forth, for example to obtain confirmation from the other party and to supply the necessary information for the other party's processing of the delivery. Similarly, the object 212B can represent an outbound delivery process between HQ Logistics and DC Berlin.

The business network area 202 also includes objects 214A-B that represent one or more electronic documents or other data structures used in the business network. In some implementations, the object 214A represents an outbound delivery document that is created and used as part of the outbound delivery process represented by the object 212A. For example, the outbound delivery document can include specifics about the delivery, such as goods types and quantities, "from" and "to" locations, and timing information. Similarly, the object 214B can represent an outbound delivery document that is created and used as part of the outbound delivery process represented by the object 212B.

Objects in the business network area 202 can be created using any suitable computer data structures. In some implementations, more than one type of object is used. For example, all objects may have in common that they can be visually represented, that values and other properties can be assigned to them, and that they are stored (e.g., in memory or on a drive) such that they persist for a determined or undetermined period, and can be updated over time.

Other object characteristics may be specific to one or more types of objects, and can reflect particular properties of the represented entities. Examples of what a "participant" in a business network can be include, but are not limited to, an application or other program, middleware, a module, an interface, a system component, a device component, a drive, a physical system, an ERP system, a group, an organization, a company, or any other entity. Accordingly, objects that represent such participants can have attributes that correspond to the respective characteristics of the participants.

Examples of such attributes include, but are not limited to: version number and platform (e.g., operating system) for software participants; model number and physical location for devices and other physical components; for implemented systems, the corresponding physical device(s); and for groups, organizations and companies, headquarter location and other contact information. In some implementations, objects can have different attributes than those mentioned here.

One advantage of a generated business network model is the flexibility it offers in visualizing and managing the business network. For example, the agents or proxies can gather information either continuously or at specified times, and the model can be updated to reflect the current status and composition of the business network. This can provide an essentially real time dynamic view of the business network.

Another example of flexibility is that a user can modify the business network model and view resulting information. Such model modifications can be an informative and useful way of testing a change before implementing it in the actual business network. An example of modification will now be described.

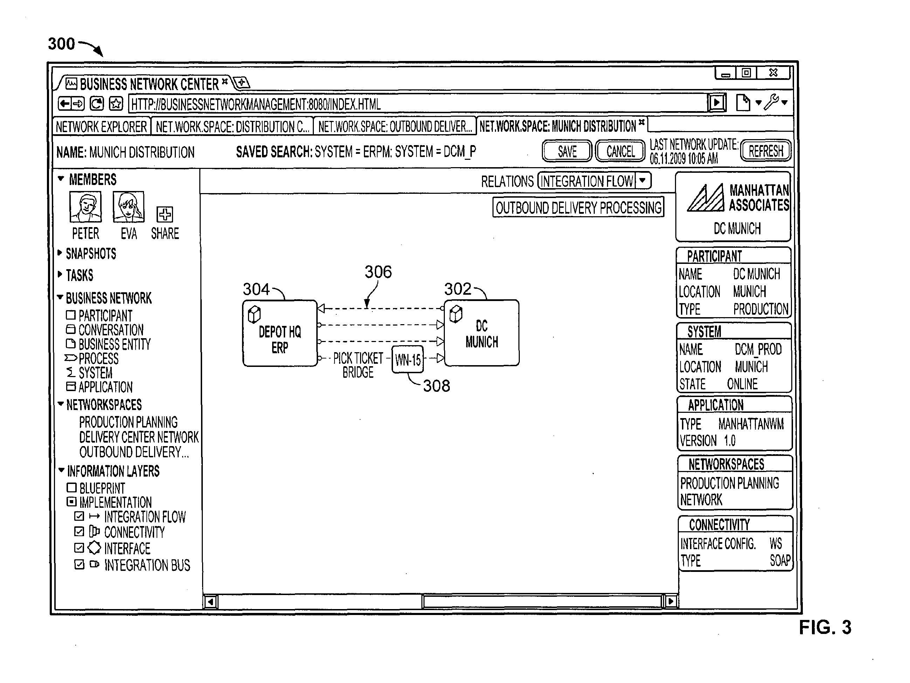

Assume that the user wishes to add one more distribution center as an application participant in the business network model. For example, the organization behind the HQ Logistics application participant (FIG. 1) is contemplating to incorporate an existing Munich distribution center into the business network. This example refers also to FIGS. 3-9.

FIG. 3 shows a view 300 of another business network. In some implementations, the view 300 is created using another business network model from the prospective distribution center, here called "DC Munich." The view 300 may then be generated from such a business network model in analogy with the description above. For example, the DC Munich may have participated in a corresponding discovery of its existing business network and the obtained information can be shared for purposes of streamlining the incorporation of DC Munich into the new business network. In some implementations, the view 300 is accessed by running a particular search in the business network management system.

Accordingly, the view 300 shows an object 302 representing the DC Munich as an application participant and an object 304 likewise representing an ERP system of the depot headquarters (here "Depot HQ") with which the DC Munich interacts as an application participant. Also, an object 306 represents a "pick ticket bridge" interaction between the Depot HQ and DC Munich. For example, the pick ticket bridge interaction is the way for the respective systems to communicate about transportation and receipt of goods. An object 308 is here labeled "WN-15" and can represent a mediation participant in the communication, such as middleware or an interface.

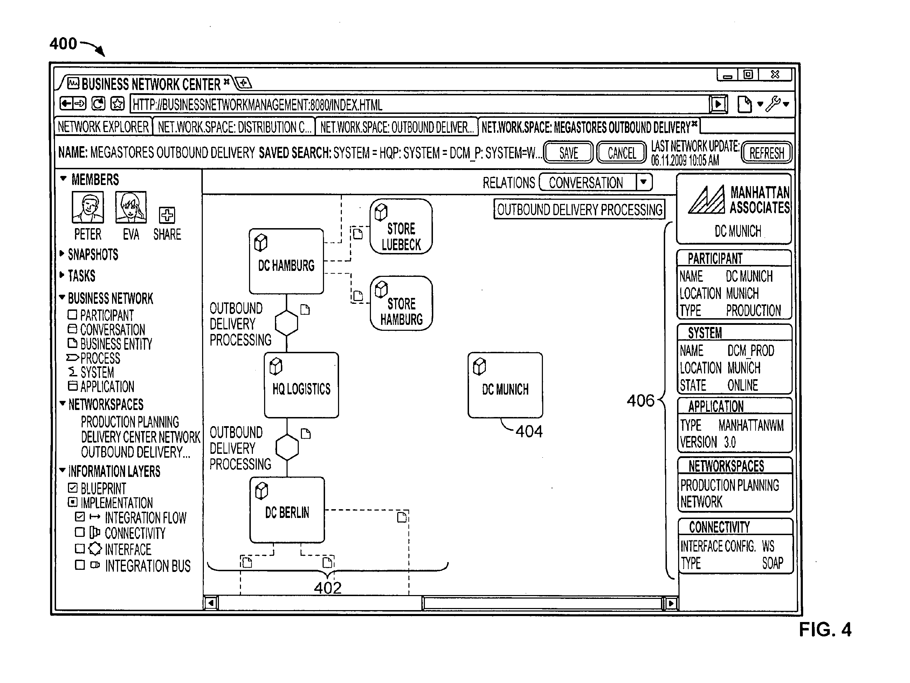

FIG. 4 shows a view 400 of the business network from FIG. 2 with an added object. The view 400 is here designed for use in beginning the integration of DC Munich into the existing business network model. Objects 402 have been placed in the view, and they represent participants and relationships in the existing business network model. For example, the objects 402 can be the result after the user chooses to hide some of the objects visible in the view 200 (FIG. 2). Here, the HQ Logistics application participant and the DC Berlin and Hamburg application participant are visible, as are a few of the store participants for the latter DC.

The view also includes an object 404 representing the DC Munich as an application participant. In some implementations, the user can trigger creation of the object 404 from the view 300 (FIG. 3). For example, the user can drag-and-drop the object into the view 400, either before or after the objects 402 are present there. As another example, the user can select at least the DC Munich object in the view 300 and activate a function that opens a new business network area having the selected object(s).

Some implementations use a "master" object representing every kind of participant (or, as another example, all distribution center participants). Such an object can then be used to create any and all required instances of the object. For example, the objects 402 and 404 here may have been created as individualized instances of a general participant object, or as respective individualized instances of more specific master objects.

That is, the view 400 currently shows a starting point of the proposed enhancement of the business network, in that DC Munich and (portions of) the existing business network are displayed in the same context. A business network information area 406 shows information about any and all selected objects in the view 400. For example, currently it shows information about DC Munich as an application participant obtained from the other business network model that underlies the view 300 (FIG. 3).

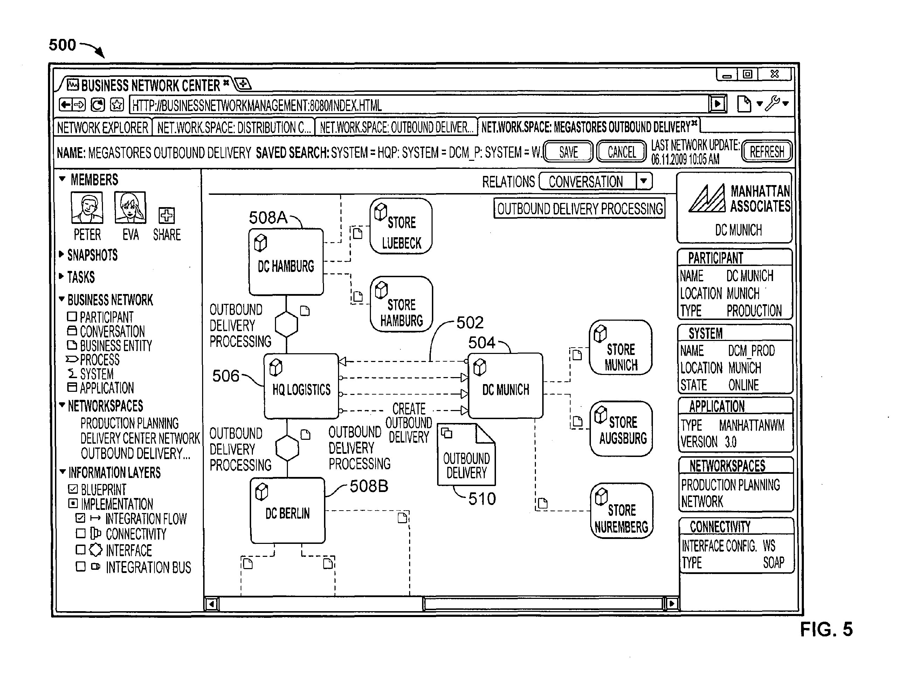

Such information about the other business network, and about DC Munich, will be used when designing the integration of DC Munich into the current business network. For a start, one approach is to apply a same or similar communication to DC Munich as is used for other DCs in the existing business network. FIG. 5 shows another view 500 of the business network from FIG. 4. Here an object 502 has been added that connects an object 504 for DC Munich with an object 506 for DC Logistics. For example, the object 502 can represent an outbound delivery process, in analogy with those mentioned above for other DCs. In some implementations, the business network management system 108 (FIG. 1) can automatically propose the object 502, for example based on similarities between the object 502 and respective objects 508A-B for the DC Hamburg and Berlin systems. In some implementations, the user can choose to create the object 502 from a palette of multiple available objects, and can specify that the object 502 should connect the objects 502 and 506 to each other.

Moreover, the view 500 here also includes an object 510 representing an electronic document for the interaction or communication between the participants. For example, the document can relate to outbound processing and can contain details about the goods and/or the shipment, for use by the respective systems. In some implementations, the required information for the electronic document is obtained from the existing metadata, to the extent possible. The user can then access the document, for example by clicking on the object 510 and view the contents. In some implementations, the access also allows the user to edit information to further facilitate the integration.

It can be seen that the view 500 includes an interactive combination of objects: some objects corresponding to "real" features in the business network that were discovered by agents or proxies, such as application or mediation participants, and other objects that represent either existing entities not currently part of the business network (e.g., the DC Munich), or more or less fictitious entities that strictly speaking do not exist yet (e.g., the outbound delivery connection between HQ Logistics and DC Munich). Accordingly, while additional enhancements are described in the following, the view 500 in itself gives a user-whether a business person or an IT specialist-a good hands-on understanding of the task of integrating DC Munich into the existing business network.

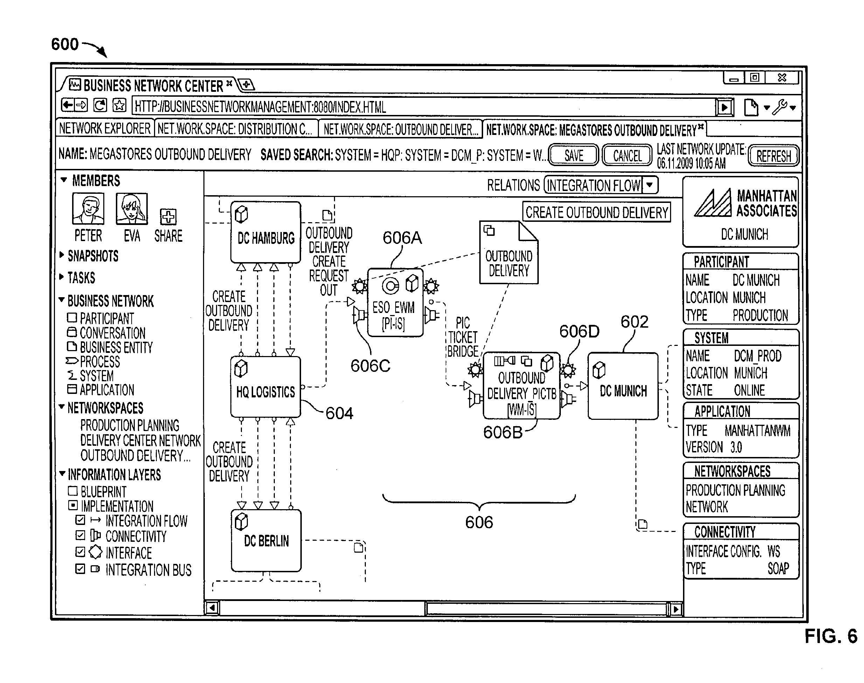

FIG. 6 shows another view 600 of the business network from FIG. 4. Here, a portion of the business network including the application participants DC Munich (object 602) and HQ Logistics (object 604) is visible. However, the outbound delivery connection between them has been implemented using integration middleware systems, here represented as mediation participant objects 606, whereas the agent or proxy would retrieve metadata about the integration middleware systems for providing a more detailed view on the connection. In some implementations, the user triggers the expansion by selecting (e.g., clicking on) the object 502 (FIG. 5) representing the outbound delivery connection.

For example, the mediation participant objects 606 here include an object 606A representing a particular component, device and/or interface that the HQ Logistics system uses for its outbound delivery communications. As another example, the objects 606 include an object 606B representing discovered information about the DC Munich and the integration middleware components, devices and/or interfaces used by that application participant. Additional objects 606C and D represent other components that are or could be part of the system-to-system communication.

The presentation of mediation participant objects 606 can be facilitated by use of multiple layers for the objects. For example, the object 502 (FIG. 5) can correspond to a representation of the business network model at a first level of detail, and the object 502 is therefore assigned to a first information layer. The mediation participant objects 606, in contrast, can be assigned to a common layer, or multiple layers, lower than the first level of detail.

Accordingly, the information layers at different levels of detail allow the user to zoom into or out of the representation of the business network model, to explore features at the granularity that is relevant for the user. That is, the user can drill into the model representation at any component thereof, to reveal underlying details to an arbitrary depth. For example, a business user might prefer a higher level of detail that shows mostly business interactions but does not focus on hardware or other technical components. In contrast, an IT employee who needs to understand the system may be less concerned about the business interactions than with the process integration aspects and technical details about how the interactions are accomplished. The business network model allows the visualization to meet both users' needs.

In some implementations, an object can be "preserved" when zooming into or out of the business network. For example, assume that the user has drilled in to a deep technical level and there finds a component (represented by an object) that the user decides to look more closely at. However, the user now wishes to zoom out to a higher level to get a clearer picture of where in the business network this component operates. The user can then select or otherwise mark the object at the level where it is visible, and thereafter initiate the navigation to the higher level, wherein the selected object representing the component will be visible also at the higher level, despite the fact that the object is assigned to a deeper information layer.

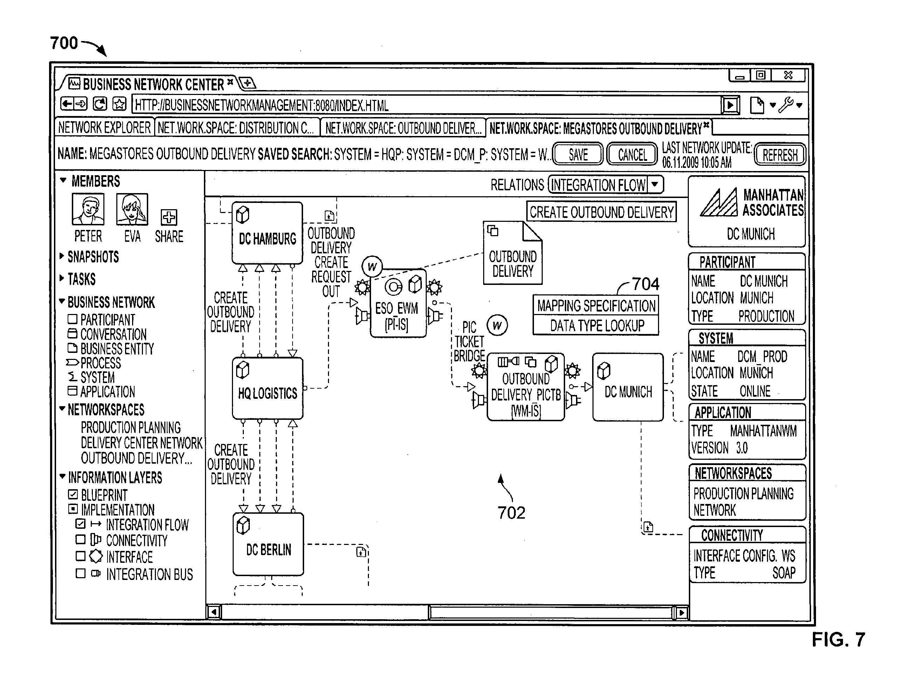

FIG. 7 shows another view 700 of the business network from FIG. 4. The view includes objects 702 that essentially correspond to those of the view 600 (FIG. 6), and also has a control 704 that the user can employ to further enhance the integration. For example, the control 704 allows the user to access and/or enhance a mapping specification between the respective components of the two systems. In some implementations, automated mapping is performed to the extent possible, and the system then presents the mapping to the user, optionally for further enhancement by the user.

As another example, the control 704 can provide a data type lookup function. In some implementations, the respective HQ Logistics and DC Munich application participants use data of types that are not possible to immediately translate into each other, and looking up the data types can therefore aid the user in creating any necessary enhancements.

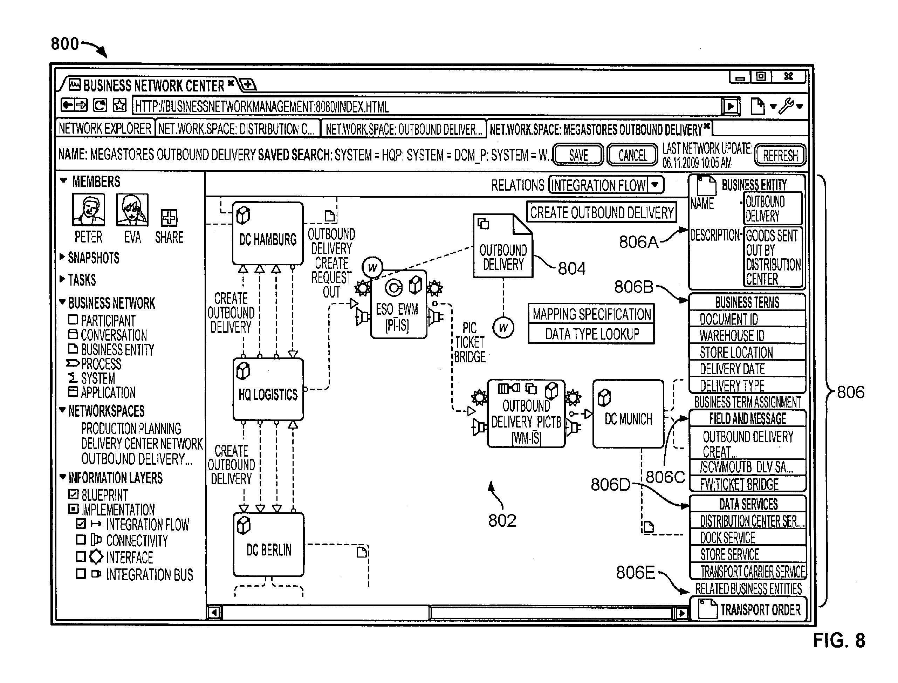

FIG. 8 shows another view 800 of the business network from FIG. 4. The view 800 includes objects 802 that essentially correspond to those of the view 600 (FIG. 6), except that the user has selected one of the objects, here an object 804 representing an outbound delivery document. Selecting any object can cause additional discovered information about that object to be presented. In some implementations, an object information area 806 is included. For example, the area 806 can show specifics about the outbound delivery document and the information that would be exchanged in an actual implementation, such as business terms associated with the outbound delivery process.

Here, the area 806 includes a portion 806A showing information about the outbound delivery as a business transaction document entity. An area 806B shows information about business terms in the outbound delivery. An area 806C shows information about fields and messages relating to the outbound delivery. An area 806D. shows information about data services relating to the outbound delivery. An area 806E shows information about business transaction document entities relating to the outbound delivery, such as a particular transport order that is the basis for delivering the goods. Accordingly, the view 800 allows the user, such as a business person, to review these business transaction documents in the context of the business network to which they apply.

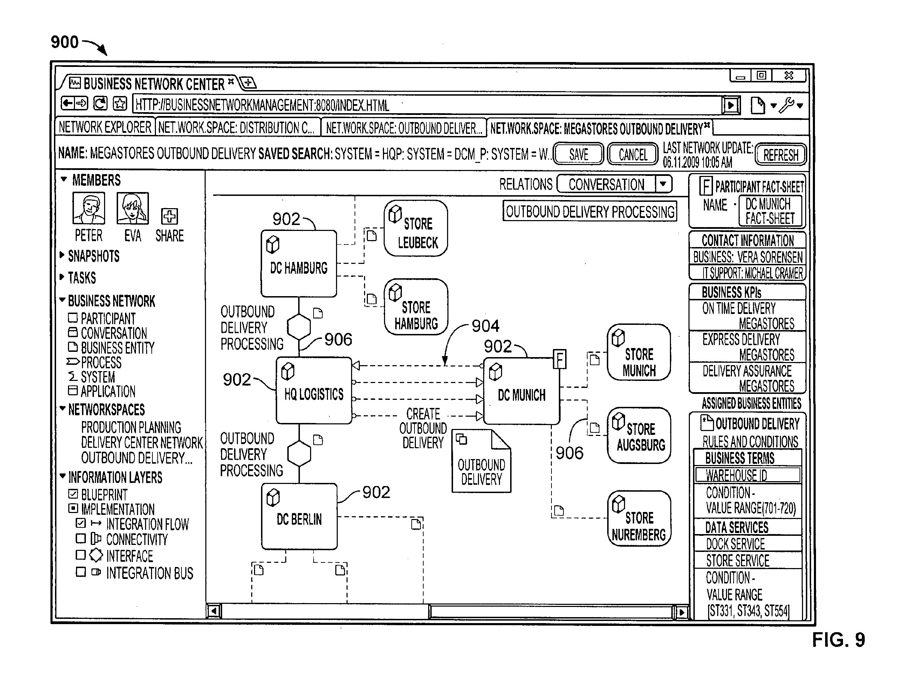

FIG. 9 shows another view 900 of the business network from FIG. 4. In a sense, the view 900 shows the final result of enhancing the business network model to show the effect of incorporating DC Munich into the existing business network as an application participant. Here, the view includes objects 902 representing the participants in the extended business network, an object 904 representing an outbound delivery to the DC Munich, and other objects 906 that represent interactions between the participants. The metadata may now have been completed at every desired level of detail, so that the business network model essentially is a realistic representation of how the business network could look and function if the DC Munich were incorporated therein.

In implementations where the enhancement of the business network model is done at a sufficient level of complexity, the enhanced model can be used to perform simulations of the interactions that involve the added feature (here, the DC Munich). For example, if the model has now been provided with realistic representations of interface connections, data mappings and handoff procedures, etc., between the HQ Logistics and DC Munich application participants, then the system (e.g., the business network management system 108 in FIG. 1) can run test communications between these participants and evaluate how the information transfer works.

In some implementations, the agents or proxies also generate metadata about instances of business transaction document exchanges. For example, this can allow a user to monitor execution and performance of business transactions between participants, such as the status of business transaction document exchanges. The business network management system 108 (FIG. 1) enables the user to select the relevant parts of the business network-for example based on the user's area of responsibility or interest-and the level of detail to be monitored. The business network management system then enables SLAs between participants to be monitored and tracked.

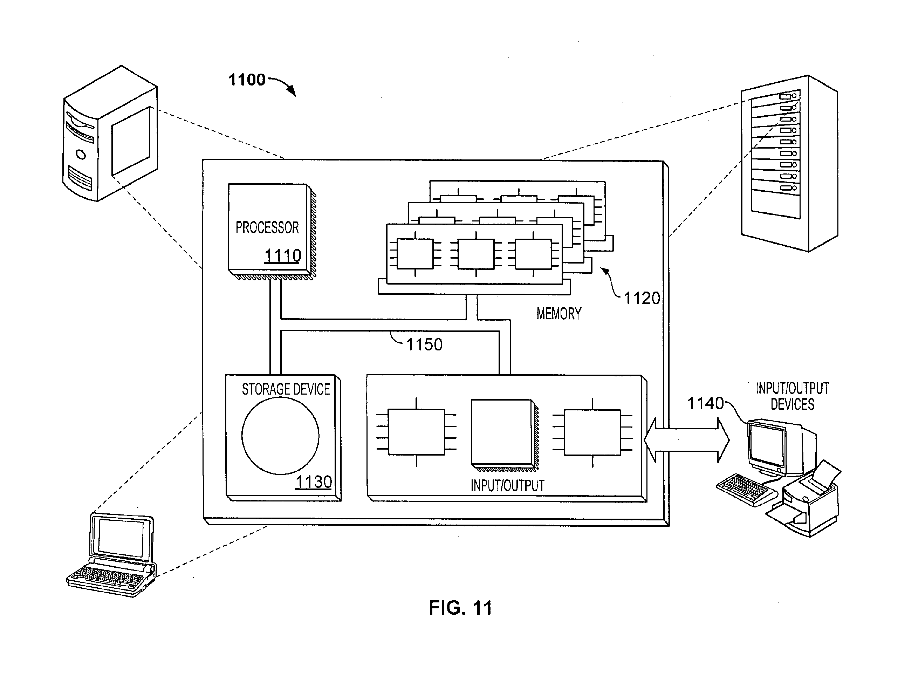

FIG. 11 is a schematic diagram of a generic computer system 1100. The system 1100 can be used for the operations described in association with any of the computer-implement methods described previously, according to one implementation. The system 1100 includes a processor 1110, a memory 1120, a storage device 1130, and an inpudoutput device 1140. Each of the components 1110, 1120, 1130, and 1140 are interconnected using a system bus 1150. The processor 1110 is capable of processing instructions for execution within the system 1100. In one implementation, the processor 1110 is a single-threaded processor. In another implementation, the processor 1110 is a multi-threaded processor. The processor 1110 is capable of processing instructions stored in the memory 1120 or on the storage device 1130 to display graphical information for a user interface on the input/output device 1140.

The memory 1120 stores information within the system 1100. In some implementations, the memory 1120 is a computer-readable medium. The memory 1120 is a volatile memory unit in some implementations and is a non-volatile memory unit in other implementations.

The storage device 1130 is capable of providing mass storage for the system 1100. In one implementation, the storage device 1130 is a computer-readable medium. In various different implementations, the storage device 1130 may be a floppy disk device, a hard disk device, an optical disk device, or a tape device.

The input/output device 1140 provides input/output operations for the system 1100. In one implementation, the input/output device 1140 includes a keyboard and/or pointing device. In another implementation, the input/output device 1140 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of implementations have been described. Nevertheless, it will be understood that various modifications may be made without departing from the spirit and scope of this disclosure. Accordingly, other implementations are within the scope of the following claims.

## Claims

1. A computer-implemented method comprising:
receiving metadata about a business network, the metadata gathered by computer-based entities performing automated discovery of the business network;
generating a business network model based on the metadata, the business network model comprising objects and associations between them, the objects representing aspects of the business network found by the automated discovery, including at least: participants, systems, relationships, applications, interfaces, middleware, process steps, and documents; and
modifying the business network model based on at least one input.

2. The method of claim 1, wherein the input includes a network enhancement instruction, and wherein the business network model is modified by adding at least a first object, and
wherein the first object may represent an organization being added to the business network as a participant, and
optionally further comprising receiving other metadata reflecting another business network to which the organization belongs, and using the other metadata in modifying the business network model.

3. The method of claim 2, wherein the network enhancement instruction includes a simulation instruction, further comprising using the modified business network model to perform a simulated operation of the business network.

4. The method of any of the preceding claims, wherein the input includes a network update instruction based on additional metadata about the business network, and wherein the business network model is modified using the additional metadata.

5. The method of any of the preceding claims, further comprising.
defining information layers in the business network model and assigning each of the objects to at least one of the information layers, further comprising:
generating a first representation of the business network model at a first level of detail, the .first representation including objects assigned to a first information layer.

6. The method of claim 5, further comprising:
receiving a user selection of one of the objects at the first level of detail; and
generating a second representation of the business network model at a second level of detail less detailed than the first level, the second representation including those of the objects assigned to a second information layer;
wherein, based on the user selection, the second representation also includes the selected object from the first level of detail.

7. The method of any of the preceding claims, wherein generating the business network model comprises:
generating a first object representing a non-individualized aspect of the business network;
generating second objects representing instances of the non-individualized aspect; and
associating the second objects with the first object in the business network model.

8. The method of any of the preceding claims, further comprising using the business network model or the modified business network model for business network lifecycle activities including aiding at least one user in: understanding a first state of the business network, and planning a second state of the business network; and/or wherein the business network lifecycle activities further include aiding the user in:
designing and specifying the second state of the business network, and
implementing the second state; and/or
wherein the business network lifecycle activities further include aiding the user in:
causing the business network to assume the second state, and operating and
monitoring the business network in the second state; and/or
wherein the business network lifecycle activities further include aiding the user in:
optimizing the business network, and simulating the business network.

9. The method of any of the preceding claims, further comprising automatically monitoring or enforcing at least one contract that governs the business network, the contract being monitored or enforced using the business network model.

10. A computer program product tangibly embodied in a computer readable storage device, the computer program product comprising instructions that when executed cause a processor to perform a method according to any one of claims 1 to 9.

11. A system comprising:
a processor; and
a computer readable storage device having stored therein:
first instructions that when executed cause the processor to generate a business network model based on metadata gathered by computer-based entities performing automated discovery of a business network, the business network model comprising objects and associations between them, the objects representing aspects of the business network found by the automated discovery, including at least: participants, systems, relationships, applications, interfaces, middleware, process steps, and documents metadata; and
second instructions that when executed cause the processor to modify the business network model based on at least one input.

12. The system of claim 11, wherein the input includes a network enhancement instruction, and wherein the business network model is modified by adding at least a first object.

13. The system of claim 12, wherein the network enhancement instruction includes a simulation instruction, further comprising using the modified business network model to perform a simulated operation of the business network.

14. The system of any of the preceding claims 11 to 13, further comprising defining information layers in the business network model and assigning each of the objects to at least one of the information layers, further comprising:
generating a first representation of the business network model at a first level of detail, the first representation including objects assigned to a first information layer.

15. The system of any of the preceding claims 11 to 14, wherein generating the business network model comprises:
generating a first object representing a non-individualized aspect of the business network;
generating second objects representing instances of non-individualized aspect; and
associating the second objects with the first object in the business network model.
